# EUROPÄISCHE PATENTSCHRIFT

(11) **EP 2 091 984 B1**
(45) Veröffentlichungstag und Bekanntmachung des Hinweises auf die Patenterteilung: **05.06.2013**
(21) Anmeldenummer: 07818854.7
(22) Anmeldetag: 09.10.2007
(51) Int. Cl.: C08F 293/00, C08L 53/00, C09D 153/00

(54) **NETZ- UND DISPERGIERMITTEL BASIEREND AUF MISCHUNGEN VON STRUKTURIERTEN COPOLYMEREN**
WETTING AGENTS AND DISPERSANTS BASED ON MIXTURES OF STRUCTURED COPOLYMERS
AGENTS MOUILLANTS ET AGENTS DISPERSANTS À BASE DE MÉLANGES DE COPOLYMÈRES STRUCTURÉS

(30) Priorität: 10.10.2006 DE 102006048144
(43) Veröffentlichungstag der Anmeldung: 26.08.2009
(73) Patentinhaber: BYK-Chemie GmbH, 46483 Wesel (DE)
(72) Erfinder: GÖBELT, Bernd, 46487 Wesel (DE); OMEIS, Jürgen, 46286 Dorsten-Lembeck (DE); STELZ, Sabine, 46047 Oberhausen (DE); KÖHLER, Sandra, 46483 Wesel (DE)
(74) Vertreter: Leifert & Steffan
(86) Internationale Anmeldenummer: PCT/EP2007/008781
(87) Internationale Veröffentlichungsnummer: WO 2008/043529

(56) Entgegenhaltungen:
- EP-A- 1 416 019
- US-B1- 6 455 628

## Beschreibung

Die Erfindung betrifft die Mischungen zweier linearer, strukturierter Copolymere, die sich durch die Wahl zweier unterschiedlicher Polymerisationstechniken und unterschiedlicher Molekulargewichtsverteilungen (Polydispersitäten) M_{w}/Mₙ, auszeichnen und als Dispergiermittel, zur Behandlung von Pigmenten sowie als Additiv in Überzugsmitteln und Formmassen geeignet sind. Des Weiteren betrifft die Erfindung die Verwendung derartiger Mischungen als Netz- und Dispergiermittel.

In den letzen Jahren wurden verschiedene kontrollierte Polymerisationsverfahren entwickelt, die sich zur Darstellung von Blockcopolymeren eignen. Zu diesen gehört beispielsweise der "Reversible Addition Fragmentation Chain Transfer Process" (RAFT), der bei Verwendung bestimmter Polymerisationsregler auch MADIX und "Addition Fragmentation Chain Transfer" genannt wird. RAFT ist beispielsweise in Polym. Int. 2000, 49, 993, Aust. J. Chem 2005, 58, 379, J. Polym. Sci. Part A: Polym. Chem. 2005, 43, 5347, US 6 291 620, WO 98/01478, WO 98/58974 und WO 99/31144 beschrieben. Ein weiteres Verfahren zur kontrollierten Polymerisation bedient sich Nitroxylverbindungen als Polymerisationsreglem (NMP) und wird beispielsweise in Chem. Rev. 2001, 101, 3661 offenbart. Die "Atom Transfer Radical Polymerization" (ATRP) ermöglicht ebenfalls eine kontrollierte Polymerisation und ist beispielsweise in Chem. Rev. 2001, 101, 2921 beschrieben. Weitere kontrollierte Polymerisationsverfahren sind zum Beispiel die "Group Transfer Polymerization" (GTP), wie sie beispielsweise von O. W. Webster in "Group Transfer Polymerization", in "Encyclopedia of Polymer Science and Engineering", Band 7, H. F. Mark, N. M. Bikales, C. G. Overberger and G. Menges, Eds., Wiley Interscience, New York 1987, Seite 580 ff. offenbart ist, die kontrollierte radikalische Polymerisation mit Tetraphenylethan, wie sie beispielsweise in Macromol. Symp. 1996, 111, 63 beschrieben ist, die kontrollierte radikalische Polymerisation mit 1,1-Diphenylethen als Polymerisationsregler, wie beispielsweise in Macromolecular Rapid Communications, 2001, 22, 700 beschrieben, die kontrollierte radikalische Polymerisation mit Inifertem, wie sie beispielsweise in Makromol. Chem. Rapid. Commun. 1982, 3, 127 offenbart wird und die kontrollierte radikalische Polymerisation mit Organokobaltkomplexen, wie sie beispielsweise aus J. Am. Chem. Soc. 1994, 116, 7973 bekannt ist.

In verschiedenen Druckschriften wie in US 6,849,679, US 4,656,226, US 4,755,563, US 5,085,698, US 5,160,372, US 5,219,945, US 5,221,334, US 5,272,201, US 5,519,085, US 5,859,113, US 6,306,994, US 6,316,564, US 6,413,306, WO 01/44389, WO 03/046029 und EP 1 416 019 wird die Verwendung von Blockcopolymeren und Gradientencopolymeren, die mit kontrollierten Polymerisationsverfahren erhalten werden, als Netz- und Dispergiermittel beschrieben.

Im Folgenden werden Blockcopolymere sowie Gradientencopolymere als strukturierte Copolymere bezeichnet.

Trotz der Verwendung solcher strukturierter Copolymere im Vergleich zu statistischen Copolymeren besteht weiterhin der dringende Bedarf an besseren Dispergiermitteln, speziell an einer verbesserten Verträglichkeit von Pigmentkonzentraten, die mit diesen Netz- und Dispergiermitteln hergestellt werden, mit unterschiedlichen Auflackbindemitteln.

Überraschenderweise wurde gefunden, dass Mischungen zweier linearer, strukturierter Copolymere, die dadurch gekennzeichnet sind, dass sie mit zwei unterschiedlichen kontrollierten Polymerisationstechniken hergestellt werden und unterschiedliche Molekulargewichtsverteilungen (M_{w}/Mₙ) besitzen, bei gleich guter Stabilisierung der Pigmentdispersion in Pigmentkonzentraten, Tinten oder flüssigen Überzugsmitteln und entsprechender Viskositätsreduzierung eine breitere Verträglichkeit gegenüber verschiedenen Bindemittelsystemen besitzen, als die Netz- und Dispergiermittel des Stands der Technik.

US 6,455,628 beschreibt die Kombination von Blockcopolymeren mit statistischen Copolymeren zur Verbesserung der Benetzung von Pigmenten und somit der Reduzierung der Dispergierzeit bei der Herstellung von wässrigen Pigmentkonzentraten. Es wird aber keine breitere Verträglichkeit dieser Pigmentkonzentrate mit unterschiedlichen Auflacksystemen erhalten.

Als erfindungsgemäße Mischungen beziehungsweise Zusammensetzungen werden solche verstanden, die mindestens zwei strukturierte lineare Copolymere enthalten, die gewählt sind aus der Gruppe bestehend aus Blockcopolymeren und Gradientencopolymeren und wobei diese Copolymere mit unterschiedlichen kontrollierten Polymerisationstechniken hergestellt werden und die Differenz der Polydispersitäten dieser Copolymere Δ(M_{w}/Mₙ) ≥ 0,25 ist.

Hierbei können die Mischungen zwei Copolymere enthalten, die sich in ihren Polymerstrukturen, Molekulargewichten und Monomerzusammensetzungen unterscheiden.

Strukturierte Copolymere der erfindungsgemäßen Mischungen sind Gradientencopolymere und lineare Blockcopolymere.

Gradientencopolymere der erfindungsgemäßen Mischungen sind lineare Copolymere, bei denen entlang der Polymerketten von ihrem Anfang bis zu ihrem Ende die Konzentration eines ethylenisch ungesättigten Monomers oder einer Mischung von ethylenisch ungesättigten Monomeren kontinuierlich abnimmt und die Konzentration eines anderen ethylenisch gesättigten Monomers oder einer anderen Mischung von ethylenisch ungesättigten Monomeren zunimmt. Solche Gradientencopolymere sind beispielsweise in EP 1 416 019 und in WO 01/44389 beschrieben. Efindungsgemäß können auch beide strukturierten linearen Copolymere der erfindungsgemäßen Zusammensetzung Gradientencopolymere sein.

Blockcopolymere der erfindungsgemäßen Polymermischungen sind lineare Copolymere, die durch Zugabe von mindestens zweier unterschiedlicher ethylenisch ungesättigten Monomere, zweier unterschiedlicher Mischungen ethylenisch ungesättigter Monomere oder durch Zugabe eines ethylenisch ungesättigten Monomers und einer Mischung ethylenisch ungesättigter Monomere zu unterschiedlichen Zeitpunkten bei der Durchführung einer kontrollierten Polymerisation erhalten werden, wobei ein ethylenisch ungesättigtes Monomer oder eine Mischung von ethylenisch ungesättigten Monomeren bei Beginn der Reaktion im Reaktionsgefäß vorgelegt werden kann. Bei der Zugabe des weiteren ethylenisch ungesättigten Monomers oder der Mischung ethylenisch ungesättigter Monomere oder der Zugabe ethylenisch ungesättigter Monomere bei mehreren Zugaben, können die ethylenisch ungesättigten Monomere, die sich im Reaktionsgefäß befinden, schon komplett abreagiert haben, aber auch noch teilweise vorliegen. Durch ein solches Herstellverfahren enthalten solche Blockcopolymere mindestens einen sprunghaften Übergang in ihrer Zusammensetzung an ethylenisch gesättigten Monomeren entlang der Polymerkette, der die Grenze zwischen den einzelnen Blöcken darstellt. Solche Blockcopolymerstrukturen sind beispielsweise AB-Diblockcopolymere, ABA- oder ABC-Triblockcopolymere, wie sie in der vorliegenden Erfindung eingesetzt werden können. Beispiele solcher Blockcopolymerstrukturen werden in den Patentschriften US 6,849,679, US 4,656,226, US 4,755,563, US 5,085,698, US 5,160,372, US 5,219,945, US 5,221,334, US 5,272,201, US 5,519,085, US 5,859,113, US 6,306,994, US 6,316,564, US 6,413,306, WO 01/44389 und WO 03/046029, beschrieben. Blockcopolymere wie sie in der vorliegenden Erfindung eingesetzt werden enthalten Blöcke mit einer Mindestanzahl von 3 einpolymerisierten ethylenisch ungesättigten Monomeren pro Block. Vorzugsweise beträgt die Mindestanzahl einpolymerisierter ethylenisch ungesättigter Monomere pro Block 3, besonders bevorzugt 5 und ganz besonders bevorzugt 10. In einer bevorzugten Ausführungsform sind beide strukturierten linearen Copolymere der erfindungsgemäßen Zusammensetzung Blockcopolymere, wobei diese vorzugsweise gewählt sind aus der Gruppe bestehend aus AB-, ABA- und ABC-Blockcopolymeren. Es ist jedoch auch möglich, dass eines der beiden Copolymere ein Gradientencopolymer ist und das andere ein Blockcopolymer. Werden Blockcopolymere allein oder mit Gradientencopolymeren eingesetzt, so besitzt vorzugsweise mindestens ein Blockcopolymer eine AB-Struktur.

Ganz besonders bevorzugt sind Blockcopolymere, bei welchen mindestens einer der Blöcke aus mindestens zwei unterschiedlichen einpolymerisierten ethylenisch ungesättigten Monomeren zusammengesetzt ist. Vorzugsweise enthalten alle Blöcke innerhalb des Blockcopolymeren jeweils mindestens zwei unterschiedliche einpolymerisierte ethylenisch ungesättigte Monomere. Ganz besonders bevorzugt enthalten die Blöcke jeweils mindestens drei, vier oder fünf verschiedene einpolymerisierte Monomere.

Vorzugsweise besitzen die einzelnen Polymere der erfindungsmäßen Mischung ein zahlenmittleres Molekulargewicht Mₙ von 1000 bis 20000 g/mol, besonders bevorzugt 2000 bis 20000 g/mol und ganz besonders bevorzugt 2000 bis 15000 g/mol.

Weiterhin zeichnen sich die einzelnen Polymere in der erfindungsgemäßen Copolymermischung durch eine unterschiedliche Molekulargewichtsverteilung M_{w}/Mₙ aus, die vorzugsweise von 1,05 bis 4,0 reicht. Hierbei beträgt der Unterschied in der Molekulargewichtsverteilung (Polydispersität) Δ(M_{w}/Mₙ) zwischen den einzelnen Copolymeren mindestens 0,25.

Vorzugsweise enthalten die strukturierten Copolymere der erfindungsgemäßen Polymermischungen polare ethylenisch ungesättigte Monomere aus der Gruppe der aminogruppenhaltigen ethylenisch ungesättigten Monomere und/oder der säuregruppenhaltigen ethylenisch ungesättigten Monomere sowie die Umsetzungsprodukte der Aminogruppen beziehungsweise Säuregruppen zu Salzen.

Aminogruppenhaltige ethylenisch ungesättigte Monomere sind, wobei die Schreibweise (Meth)acrylat sowohl Acrylate als auch Methacrylate einschließt, beispielsweise: Aminoalkyl(meth)acrylate, wie zum Beispiel N,N-Dimethylaminoethyl(meth)acrylat und N,N-Dimethylaminopropyl(meth)acrylat; Aminoalkyl(meth)acryamide, wie zum Beispiel N,N-Dimethylaminopropyl-(meth)acrylamid oder basische Vinylheterocyclen, wie zum Beispiel 4-Vinylpyridin und Vinylimidazol.

Aminogruppenhaltige ethylenisch ungesättigte Monomere können auch durch polymeranaloge Reaktionen nach dem Aufbau der Polymerkette erzeugt werden. So können oxiranhaltige ethylenisch ungesättigte Monomere wie Glycidylmethacrylat nach der Polymerisation mit Aminen umsetzt werden.

Umsetzungprodukte von aminogruppenhaltigen, ethylenisch ungesättigten Monomeren zu Salzen können zum Beispiel durch Versalzung von am Polymer gebundenen Aminogruppen mit Carbonsäuren, Sulfonsäuren oder Phosphorsäuren und deren Estern erhalten werden, wie es beispielsweise in US 6111054 beschrieben ist.

Weiterhin lassen sich Aminogruppen in Alkylierungsreaktionen zum Beispiel mit Benzylchlorid oder einer Kombination von Oxiran mit Carbonsäuren zu quartären Ammoniumgruppen versalzen. Tertiäre Amine können mit Sauerstoff, Peroxoverbindungen wie Percarbonsäuren und mit Wasserstoffperoxid in Aminoxide überführt werden, die zusätzlich mit Säuren wie zum Beispiel Salzsäure versalzt werden können.

Diese Umsetzungen können als polymeranaloge Reaktionen nach der Polymerisation durchgeführt werden, es können aber auch die Umsetzungsprodukte von aminogruppenhaltigen ethylenisch ungesättigten Monomeren zu Salzen direkt bei der Polymerisation eingesetzt werden.

Beispiele für solche Umsetzungsprodukte, die direkt als Monomere bei der Polymerisation eingesetzt werden können, sind 2-Trimethylammoniumethyl-(meth)acrylatchlorid, 3-Trimethylammoniumpropyl(meth)acrylamidchlorid und 2-Benzyldimethyl-ammoniumethyl(meth)acrylatchlorid.

Säuregruppenhaltige ethylenisch ungesättigte Monomere sind beispielsweise: carbonsäuregruppenhaltige ethylenisch ungesättigte Monomere, wie zum Beispiel Acrylsäure, Methacrylsäure, Maleinsäure, Fumarsäure, Itaconsäure und 4-Vinylbenzoesäure; sulfonsäuregruppenhaltige ethylenisch ungesättigte Monomere wie zum Beispiel 4-Vinylbenzolsulfonsäure, 2-Methyl-2-(1-oxo-2-propenyl)amino]-1-propansulfonsäure, 3-(Methacryloyloxy)-propansulfonsäure und 3-(Acryloyloxy)-propansulfonsäure; phosphorhaltige saure ethylenisch ungesättigte Monomere, wie zum Beispiel Tripropyleneglycol(meth)acrylatphosphat, Vinylphosphonsäure und Vinylidendiphosphonsäure.

Säuregruppenhaltige ethylenisch ungesättigte Monomere können auch durch polymeranaloge Reaktionen nach dem Aufbau der Polymerkette erzeugt werden. Salze säuregruppenhaltiger, ethylenisch ungesättigter Monomere können zum Beispiel durch Umsetzung mit Basen erhalten werden. Geeignete Basen sind beispielsweise Amine wie zum Beispiel Dimethylaminoethanol, Diethanolamin, Triethanolamin, 2-(Dimethylamino)propan-1-ol, Triethylamin, Butylamin und Dibutylamin; Hydroxide, Oxide, Carbonate und Hydrogencarbonate von Metallen der 1. bis 3. Hauptgruppe des Periodensystems der Elemente, wie zum Beispiel Natriumhydroxid, Kaliumhydroxid, Aluminiumhydroxid und Natriumhydrogencarbonat; und heterocyclische Stickstoffverbindungen wie zum Beispiel Imidazol.

Hydroxygruppen in den ethylenisch ungesättigten Monomeren lassen sich beispielsweise mit Polyphosphorsäure zu Phosphorsäureestem umsetzen. Gleiches gilt für Oxiranstrukturen in ethylenisch ungesättigten Monomeren und o-Phosphorsäure.

Weiterhin lassen sich Carbonsäurefunktionen aus esterhaltigen, ethylenisch ungesättigten Monomeren bilden. Hierbei kann der Ester wie zum Beispiel ein Alkyl(meth)acrylat säurekatalytisch zur Carbonsäurefunktion oder bei Verwendung von Basen durch Verseifung zu seinem korrespondierenden Salz umgesetzt werden.

Es ist auch möglich Säurefunktionen im Polymer aus Säureanhydriden wie zum Beispiel Maleinsäureanhydrid durch Reaktion mit hydroxyfunktionellen Verbindungen wie Wasser, einwertigen Alkoholen oder Polyethem zu erzeugen.

Alle vorgenannten Umsetzungen können als polymeranaloge Reaktionen nach der Polymerisation durchgeführt werden. Es können aber auch die Umsetzungsprodukte säuregruppenhaltiger, ethylenisch ungesättigter Monomeren zu Salzen bei der Polymerisation eingesetzt werden.
Beispiele für solche Umsetzungsprodukte, die direkt als Monomere bei der Polymerisation eingesetzt werden, sind oben genannt, können aber beispielsweise auch Natrium(meth)acrylat, Natriumtripropyleneglycol(meth)acrylatphosphat, Kalium(3-sulfopropyl)(meth)acrylat, Natrium-3-allyloxy-2-hydroxypropansulfonsäure und Dikalium-bis(3-sulfopropyl)itaconsäurediester sein.

Weitere ethylenisch ungesättigte Monomere, die zum Aufbau der strukturierten Copolymere verwendet werden können, sind: Alkyl(meth)acrylate von geradkettigen, verzweigten oder cycloaliphatischen Alkoholen mit 1 bis 22 Kohlenstoffatomen, wie zum Beispiel Methyl(meth)acrylat, Ethyl(meth)acrylat, n-Butyl(meth)acrylat, i-Butyl(meth)acrylat, Lauryl(meth)acrylat, 2-Ethylhexyl(meth)acrylat, Stearyl(meth)acrylat, Cyclohexyl(meth)acrylat, Isobomyl(meth)acrylat und t-Butyl(meth)acrylat; Aryl(meth)acrylate, wie Benzylmethacrylat oder Phenylacrylat, wobei die Arylreste jeweils unsubstituiert oder bis zu vierfach substituiert sein können, wie zum Beispiel 4-Nitrophenylmethacrylat; Hydroxyalkyl(meth)acrylate von geradkettigen, verzweigten oder cycloaliphatischen Diolen mit 2 bis 36 Kohlenstoffatomen, wie zum Beispiel 3-Hydroxypropylmethacrylat, 3,4-Dihydroxybutylmonomethacrylat, 2-Hydroxyethyl-(meth)acrylat, 4-Hydroxybutyl(meth)acrylat, 2-Hydroxypropylmethacrylat, 2,5-Dimethyl-1,6-hexandiolmonomethacrylat; Mono(meth)acrylate von Ethern, Polyethylenglykolen, Polypropylenglycolen oder gemischten Polyethylen/propylenglycolen mit 5 bis 80 Kohlenstoffatomen, wie zum Beispiel Tetrahydrofurfuryl(meth)acrylat, Methoxyethoxyethyl(meth)acrylat, 1-Butoxypropyl(meth)acrylat, Cyclohexyloxymethyl(meth)acrylat, Methoxymethoxy-ethyl(meth)acrylat, Benzyloxymethyl(meth)acrylat, Furfuryl(meth)acrylat, 2- Butoxyethyl(meth)acrylat, 2-Ethoxyethyl(meth)acrylat, Allyloxymethyl(meth)acrylat, 1-Ethoxybutyl(meth)acrylat, 1-Ethoxyethyl(meth)acrylat, Ethoxymethyl(meth)acrylat, Poly(ethylenglycol)methylether(meth)acrylat, Poly(propylenglycol)methylether(meth)-acrylat; Caprolacton- und/oder Valerolacton-modifizierte Hydroxyalkyl(meth)acrylate mit einem zahlenmittleren Molekulargewicht Mₙ von 220 bis 1200, wobei die Hydroxy(meth)acrylate bevorzugt von geradkettigen, verzweigten oder cycloaliphatischen Diolen mit 2 bis 8 Kohlenstoffatomen abgeleitet sind; (Meth)acrylate von halogenierten Alkoholen, wie zum Beispiel Perfluoralkyl(meth)acrylate mit 6 bis 20 Kohlenstoffatomen; oxiranhaltige (Meth)acrylate, wie zum Beispiel 2,3-Epoxybutylmethacrylat, 3,4-Epoxybutylmethacrylat und Glycidyl(meth)acrylat; Styrol und substituierte Styrole, wie zum Beispiel 4-Methylstyrol; Methacrylnitril und Acrylnitril; nichtbasische Vinylheterocyclen, wie zum Beispiel 1-[2-(Methacryloyloxy)-ethyl]-2-imidazolidinon und N-Vinylpyrrolidinon; Vinylester von Carbonsäuren mit 1 bis 20 Kohelnstofatomen, wie zum Beispiel Vinylacetat; Maleinimid, N-Phenylmaleinimid und N-substituierte Maleinimide mit geradkettigen, verzweigten oder cycloaliphatischen Alkylgruppen mit 1 bis 22 Kohlenstoffatomen, wie zum Beispiel N-Ethylmaleinimid und N-Octylmaleinimid; (Meth)acrylamid; N-Alkyl- und N,N-Dialkylsubstituierte Acrylamide mit geradkettigen, verzweigten oder cycloaliphatischen Alkylgruppen mit 1 bis 22 Kohlenstoffatomen, wie zum Beispiel N-(t-Butyl)acrylamid und N,N-Dimethylacrylamid; silylgruppenhaltige (Meth)acrylate, wie zum Beispiel (Meth)acrylsäure(trimethylsilylester) und Methacrylsäure-[3-(trimethylsilyl)-propylester].

Nach erfolgter Polymerisation können die eben genannten ethylenisch ungesättigten Monomere in den Polymeren ebenfalls nachträglich in polymeranalogen Reaktionen verändert werden. So lassen sich zum Beispiel Oxiranstrukturen im Polymer mit Nucleophilen wie 4-Nitrobenzoesäure umsetzen. Hydroxyfunktionalitäten der in das Polymer eingebauten ethylenisch ungesättigten Monomeren lassen sich mit Lactonen wie zum Beispiel ε-Caprolacton zu Polyestern umsetzen. Bei Polymeren, die als Monomere Vinylester enthalten, können aus diesen Esterfunktionen durch säure- oder basenkatalysierte Esterspaltung Alkoholfunktionen entstehen.

Die für die Darstellung der erfindungsgemäßen Copolymere verwendeten monofunktionellen Initiatoren starten eine Polymerkette mit nur einer Wachstumsrichtung. Die im jeweiligen lebenden, kontrollierten Polymerisationsverfahren eingesetzten monofunktionellen Initiatoren sind dem Durchschnittsfachmann bekannt. Als Initiatoren können beispielsweise Azoinitiatoren wie Azodiisobutyronitril, Peroxidverbindungen, wie Dibenzoylperoxid und Dicumylperoxid als auch Persulfate wie Ammonium-, Natrium- und Kaliumperoxodisulfat eingesetzt werden.

Je nach Polymerisationstechnik werden selbst bei Einsatz identischer ethylenisch ungesättigter Monomere selbst bei gleichen Molverhältnissen unterschiedliche Copolymere erhalten, da die unterschiedlichen Polymersiationstechniken zu unterschiedlichen Mikrostrukturen beziehungsweise. Monomerenabfolgen der einpolymersierten ethylenisch ungesättigen Monomere innerhalb Copolymeren führt. So werden beispielsweise bei der Herstellung von Blöcken in Blockcopolymeren mit unterschiedlichen Techniken bei identischem Einsatz von Monomerenmischungen unterschiedlich mikrostrukturierte Blöcke erhalten. Über die unterschiedliche durch die Herstellungstechnik bedingte Mikrostrukturierung hinaus können sich die erhaltenen Copolymere auch hinsichtlich Molekulargewicht und Molekulargewichtsverteilung deutlich unterscheiden. Gleiches gilt auch für Gradientencopolymere.

Als Polymerisationstechniken zur Herstellung der in den erfindungsgemäßen Zusammensetzungen einzusetzenden Copolymere sind alle aus dem Stand der Technik bekannten lebenden kontrollierten Polymerisationstechniken wie beispielsweise RAFT, MADIX, NMP, ATRP, GTP, die kontrollierte radikalische Polymerisation mit Tetraphenylethan, die kontrollierte radikalische Polymerisation mit 1,1-Diphenylethen, die kontrollierte radikalische Polymerisation mit Inifertem und die kontrollierte radikalische Polymerisation mit Organokobaltkomplexen einsetzbar.

Beispiele für Polymerisationsregler und Initiatoren sind in der oben zitierten Literatur aufgeführt.

Des Weiteren können bei der NMP NMP-Addukte des Initiators mit dem Polymerisationsregler eingesetzt werden, wie zum Beispiel in Chem. Rev. 2001, 101, 3661, "V. Approaches to Alkoxyamines" oder in Angewandte Chemie Int. Ed. 2004, 43, 6186 beschrieben.

Die Polymerisation kann lösemittelfrei in Substanz oder in organischen Lösemitteln und/oder Wasser erfolgen. Bei Verwendung von Lösemitteln kann die Polymerisation als klassische Lösemittelpolymerisation, bei der das Polymer im Lösemittel gelöst ist, oder als Emulsions- oder Miniemulsionspolymerisation, wie sie zum Beispiel in Angewandte Chemie Int. Ed. 2004, 43, 6186 und Macromolecules 2004, 37, 4453 beschrieben wird, durchgeführt werden. Das erhaltene Emulsions- bzw. Miniemulsionspolymerisat kann durch Salzbildung wasserlöslich gemacht werden, so dass eine homogene Polymerlösung entsteht. Die Polymere können jedoch nach der Versalzung immer noch wasserunlöslich sein.

Dabei sind die erhaltenen Copolymere nicht zwangsläufig über den Polymerisationsregler als Endgruppe definiert. Die Endgruppe kann beispielsweise nach der Polymerisation ganz oder teilweise abgespalten werden. So ist es zum Beispiel möglich, die Nitroxylendgruppe der Polymeren, welches mit NMP hergestellt wurde, thermisch durch Erhöhung der Temperatur über die Polymerisationstemperatur hinaus abzuspalten. Diese Abspaltung des Polymerisationsreglers kann beispielsweise auch durch Zugabe weiterer chemischer Verbindungen wie Polymerisationsinhibitoren, beispielsweise Phenolderivaten, oder durch ein Verfahren, wie es in Macromolecules 2001, 34, 3856 beschrieben ist, geschehen.

Der RAFT-Regler kann thermisch durch Erhöhung der Temperatur vom Polymeren abgespalten werden, durch Zugabe von Oxidationsmitteln wie Wasserstoffperoxid, Persäuren, Ozon oder anderen Bleichmitteln vom Polymeren entfernt werden oder mit Nucleophilen wie Aminen unter Ausbildung einer Thiolendgruppe umgesetzt werden.

Weiterhin lassen sich die durch ATRP erzeugten Halogenendgruppen durch Eliminierungsreaktionen abspalten oder durch Substitutionsreaktionen in andere Endgruppen umwandeln. Beispiele für solche Transformationen sind in Chem. Rev. 2001, 101, 2921 aufgeführt.

Die so erhaltenen Copolymere werden in einem Mischungsvorgang, der durch Erwärmen der Polymerlösungen unterstützt werden kann, zu der erfindungsgemäßen Polymermischung umgesetzt. Werden zwei Copolymere eingesetzt, so beträgt das Gewichtsverhältnis der beiden Copolymere zueinander vorzugsweise zwischen 5:95 und 95:5, besonders bevorzugt zwischen 10:90 und 90:10 und ganz besonders bevorzugt zwischen 20:80 und 80:20.

Die erfindungsgemäßen Zusammensetzungen enthalten vorzugsweise höchstens 10 Gew.-%, besonders bevorzugt höchstens 5 Gew.-% und ganz besonders bevorzugt höchstens 1 Gew.-% eines oder mehrerer statistischer Copolymere oder Homopolymere, die durch Abbruchreaktionen während der Polymerisation gebildet werden. Im günstigsten Fall sind die erfindungsgemäßen Zusammensetzungen frei beziehungsweise im Wesentlichen frei von statistischen Copolymeren und Homopolymeren.

Der Einsatz der erfindungsgemäßen Copolymermischungen kann gemäß dem Stand der Technik für bekannte Dispergiermittel erfolgen, wobei anstelle der nach dem Stand der Technik bekannten Dispergiermittel diejenigen gemäß der Erfindung eingesetzt werden. So können diese z. B. bei der Herstellung oder Verarbeitung von Lacken, Druckfarben, Tinten für Tintenstrahldruck, Papierstrich, Leder- und Textilfarben, Pasten, Pigmentkonzentraten, Keramiken, kosmetischen Zubereitungen eingesetzt werden, insbesondere wenn diese Feststoffe wie Pigmente und/oder Füllstoffe enthalten. Auch bei der Herstellung oder Verarbeitung von Gieß- und/oder Formmassen auf Basis von synthetischen, halbsynthetischen oder natürlichen makromolekularen Stoffen, wie zum Beispiel Polyvinylchlorid, gesättigten oder ungesättigten Polyestern, Polyurethanen, Polystyrolen, Polyacrylaten, Polyamiden, Epoxidharzen, Polyolefinen wie Polyethylen oder Polypropylen können sie eingesetzt werden. Beispielsweise lassen sich die Copolymermischungen zur Herstellung von Gießmassen, PVC-Plastisolen, Gelcoats, Polymerbeton, Leiterplatten, Industrielacken, Holz- und Möbellacken, Fahrzeuglacken, Schiffsfarben, Korrosionsschutzfarben, Can- und Coil-Coatings, Maler- und Bautenlacken, wobei Bindemittel und/oder Lösemittel, Pigmente und gegebenenfalls Füllstoffe, die Copolymermischungen und übliche Hilfsstoffe vermischt werden, verwenden. Beispiele für übliche Bindemittel sind Harze auf Basis von Polyurethanen, Cellulosenitraten, Celluloseacetobutyraten, Alkyden, Melaminen, Polyestern, Chlorkautschuken, Epoxiden und (Meth)acrylaten. Beispiele für Beschichtungen auf Wasserbasis sind kathodische oder anodische Elektrotauchlackierungen zum Beispiel für Automobilkarossen. Weitere Beispiele sind Putze, Silikatfarben, Dispersionsfarben, Wasserlacke auf Basis von wasserverdünnbaren Alkyden, Alkydemulsionen, Hybridsystemen, 2-Komponenten-Systemen, Polyurethan- und Acrylat-Dispersionen.

Die erfindungsgemäßen Copolymermischungen eignen sich insbesondere auch zur Herstellung von Feststoffkonzentraten, wie zum Beispiel Pigmentkonzentraten. Dazu werden die erfindungsgemäßen Copolymermischungen in einem Trägermedium wie organischen Lösemitteln, Weichmachern und/oder Wasser vorgelegt, und die zu dispergierenden Feststoffe werden unter Rühren zugegeben. Zusätzlich können diese Konzentrate Bindemittel und/oder andere Hilfsstoffe enthalten. Mit den erfindungsgemäßen Copolymermischungen ist es aber insbesondere möglich, stabile bindemittelfreie Pigmentkonzentrate herzustellen.

Ebenso ist es möglich, mit den erfindungsgemäßen Verbindungen fließfähige Feststoffkonzentrate aus Pigmentpresskuchen herzustellen. Hierbei wird dem Presskuchen, der noch organische Lösemittel, Weichmacher und/oder Wasser enthalten kann, die erfindungsgemäße Copolymermischung zugemischt und die so erhaltene Mischung dispergiert. Die auf verschiedenen Wegen hergestellten Feststoffkonzentrate können dann in unterschiedliche Substrate wie z. B. Alkydharze, Polyesterharze, Acrylatharze, Polyurethanharze oder Epoxidharze eingearbeitet werden. Pigmente können aber auch lösemittelfrei direkt in den erfindungsgemäßen Copolymermischungen dispergiert werden und eignen sich dann besonders zur Pigmentierung von thermoplastischen und duroplastischen Kunststoffformulierungen.
Die erfindungsgemäßen Copolymermischungen können vorteilhaft auch bei der Herstellung von Farbfiltern für Flüssigkristallanzeigen, -bildschirmen, Farbauflösungsgeräten, Sensoren, Plasmabildschirmen, Anzeigen auf Basis der SED (Surface conduction Electron emitter Display) und für MLCC (Multi Layer Ceramic Compounds) verwendet werden. Die MLCC-Technik wird bei der Herstellung von Mikrochips und Leiterplatten verwendet.

Die erfindungsgemäßen Copolymermischungen können auch zur Herstellung kosmetischer Zubereitungen wie zum Beispiel Make-ups, Pudern, Lippenstiften, Haarfärbemitteln, Cremes, Nagellacken und Sonnenschutzpräparaten verwendet werden. Diese können in den üblichen Formen, wie beispielsweise als W/O- oder O/W-Emulsionen, Lösungen, Gele, Cremes, Lotionen oder Sprays, vorliegen. Die erfindungsgemäßen Copolymermischungen können vorteilhaft in zur Herstellung dieser Zubereitungen verwendeten Dispersionen eingesetzt werden. Diese können die für diese Zwecke in der Kosmetik üblichen Trägermedien, wie zum Beispiel Wasser, Ricinusöle oder Silikonöle und Feststoffe, wie zum Beispiel organische und anorganische Pigmente wie Titandioxid oder Eisenoxid enthalten.

Gegenstand der Erfindung ist auch die Verwendung eines derartigen Dispergiermittels zur Herstellung eines pigmentierten Überzuges auf einem Substrat, wobei der Pigmentlack auf das Substrat aufgebracht wird und wobei der auf das Substrat aufgebrachte Pigmentlack eingebrannt oder ausgehärtet beziehungsweise vernetzt wird.

Die Copolymermischungen können alleine oder zusammen mit nach dem Stand der Technik üblichen Bindemitteln eingesetzt werden. Beim Einsatz in Polyolefinen kann es zum Beispiel vorteilhaft sein, entsprechende niedermolekulare Polyolefine als Trägermaterialien zusammen mit der Copolymermischung, einzusetzen.

Eine erfindungsgemäße Verwendung der Copolymermischungen besteht auch in der Herstellung dispergierbarer pulverpartikel- und/oder faserpartikelförmiger Feststoffe, insbesondere von dispergierbaren Pigmenten oder Kunststofffüllstoffen, wobei die Partikel mit der Copolymermischung beschichtet sind. Derartige Beschichtungen von organischen wie auch anorganischen Feststoffen werden in bekannter Weise ausgeführt, wie sie z. B. in EP-A-0 270 126 beschrieben werden. Hierbei kann das Lösungs- oder Emulsionsmittel entweder entfernt werden oder im Gemisch unter Bildung von Pasten verbleiben. Diese Pasten sind übliche Handelsprodukte und können zusätzlich Bindemittelanteile sowie weitere Hilfs- und Zusatzstoffe enthalten. Speziell bei Pigmenten kann die Beschichtung der Pigmentoberfläche während oder nach der Synthese der Pigmente erfolgen, zum Beispiel durch Zusatz der erfindungsgemäßen Copolymermischungen zur Pigmentsuspension oder während oder nach dem Pigmentfinish. Die auf diese Weise vorbehandelten Pigmente zeichnen sich durch leichtere Einarbeitbarkeit sowie durch verbessertes Viskositäts-, Flockulations- und Glanzverhalten und durch höhere Farbstärke gegenüber nicht behandelten Pigmenten aus.

Geeignete Pigmente sind beispielsweise Mono-, Di-, Tri- und Polyazopigmente, Oxazin-, Dioxazin-, Thiazin-Pigmente, Diketo-pyrrolo-pyrrole, Phthalocyanine, Ultramarin und andere Metallkomplex-Pigmente, indigoide Pigmente, Diphenylmethan-, Triarylmethan, Xanthen-, Acridin-, Chinacridon-, Methin-Pigmente, Anthrachinon, Pyranthron-, Perylen- und andere polycyclische Carbonyl-Pigmente. Weitere Beispiele für organische Pigmente finden sich in der Monographie: W. Herbst, K. Hunger "Industrial Organic Pigments", 1997 (Verlag: Wiley-VCH, ISBN: 3-527-28836-8). Beispiele für anorganische Pigmente sind Pigmente auf Basis von Ruß, Graphit, Zink, Titandioxid, Zinkoxid, Zinksulfid, Zinkphosphat, Bariumsulfat, Lithophone, Eisenoxid, Ultramarin, Manganphosphat, Cobaltaluminat, Cobaltstannat, Cobaltzinkat, Antimonoxid, Antimonsulfid, Chromoxid, Zinkchromat, gemischten Metalloxiden auf Basis von Nickel, Wismut, Vanadium, Molybdän, Cadmium, Titan, Zink, Mangan, Kobalt, Eisen, Chrom, Antimon, Magnesium, Aluminium (beispielsweise Nickeltitangelb, Wismut-vanadat-molybdatgelb oder Chromtitangelb), magnetische Pigmente auf Basis von Reineisen, Eisenoxiden und Chromoxiden oder Mischoxiden, Metalleffektpigmente aus Aluminium, Zink, Kupfer oder Messing sowie Perlglanzpigmente, fluoreszierende und phosphoreszierende Leuchtpigmente.

Weitere Beispiele sind nanoskalige organische oder anorganische Feststoffe mit Teilchengrößen unterhalb von 100 nm, wie bestimmte Rußtypen oder Partikel, die aus einem Metall-, oder Halbmetalloxid bzw. -hydroxid bestehen, sowie Partikel, die aus gemischten Metall- und/oder Halbmetalloxiden bezeihungsweise -hydroxiden bestehen. Beispielsweise lassen sich die Oxide und/oder Oxidhydroxide des Aluminiums, Siliziums, Zinks, Titans, und dergleichen zur Herstellung solcher extrem feinteiliger Feststoffe heranziehen. Der Herstellprozess dieser oxidischen beziehungsweise hydroxidischen beziehungsweise oxidhydroxidischen Teilchen kann über die unterschiedlichsten Verfahren wie beispielsweise Ionenaustauschprozesse, Plasmaprozesse, Sol-Gel-Verfahren, Ausfällung, Zerkleinerung (zum Beispiel durch Vermahlung) oder Flammhydrolyse und dergleichen erfolgen.

Beispiele für pulver- oder faserförmige Füllstoffe sind zum Beispiel solche, die aus pulver- oder faserförmigen Teilchen von Aluminiumoxid, Aluminiumhydroxid, Siliziumdioxid, Kieselgur, Kieselerde, Quarz, Kieselgel, Talkum, Kaolin, Glimmer, Perlite, Feldspat, Schiefermehl, Calciumsulfat, Bariumsulfat, Calciumcarbonat, Calcit, Dolomit, Glas oder Kohlenstoff aufgebaut sind. Weitere Beispiele für Pigmente oder Füllstoffe finden sich beispielsweise in der EP-A-0 270 126. Auch Flammschutzmittel wie zum Beispiel Aluminium- oder Magnesiumhydroxid und Mattierungsmittel wie beispielsweise Kieselsäuren lassen sich ebenfalls hervorragend dispergieren und stabilisieren.

Die Wahl der pigmentaffinen Gruppen und der ethylenisch ungesättigten Monomere richtet sich nach dem zu dispergierenden Pigment sowie dem flüssigen Medium und dem Bindemittel und kann von Fall zu Fall verschieden sein. Die Monomere können beispielsweise so gewählt sein, dass diese in Wechselwirkung mit dem zu dispergierenden Material treten. So werden häufig Säuregruppen als pigmentaffine Gruppen für basische Pigmentoberflächen verwendet respektive basische Gruppen für saure Pigmentoberflächen oder organische Pigmente. Für Netz- und Dispergiermittel für wässrige pigmentierte Systeme wird sehr oft über das Salz einer sauren Gruppe das Netz- und Dispergiermittel wasserlöslich gemacht.

Weiterer Gegenstand der vorliegenden Erfindung sind Lacke, Pasten und Formmassen enthaltend die erfindungsgemäßen Copolymermischungen und ein oder mehrere Pigmente, organische Lösemittel und/oder Wasser, sowie gegebenenfalls Bindemittel und lackübliche Hilfsstoffen. Des Weiteren sind Pigmente beschichtet mit den erfindungsgemäßen Copolymermischungen Gegenstand der Erfindung.

### BEISPIELE

### Herstellung der Polymere und der erfindungsgemäßen Polymermischungen

### Polymer 1 (Vergleichsbeispiel, statistisches Copolymer A hergestellt mit freier radikalischer Polymerisation)

41,29 g 1-Methoxy-2-propylacetat werden in einem Reaktionsgefäß unter einer Inertgasatmosphäre (Stickstoff) auf 135°C erwärmt. Nun wird eine Mischung aus 7,8 g 2-Hydroxyethylmethacrylat, 7,85 g 2-(N,N-Dimethylamino)ethylmethacrylat, 9,76 g Styrol, 21,4 g n-Butylacrylat, 1,58 g 2-Ethylhexylacrylat und 0,5 g tert-Butylperoxybenzoat über einen Zeitraum von 4 h hinzudosiert. Die Nachreaktionszeit beträgt 1 Stunden. Danach wird eine Mischung aus 8,78 g 1-Methoxy-2-propylacetat und 0,2 g tert-Butylperoxybenzoat über einen Zeitraum von 60 min hinzudosiert. Die Nachreaktionszeit beträgt 2 h.
Mₙ = 11450 g/mol
M_{w}/Mₙ = 2,21

### Bildung der ionischen Gruppen:

80 g der Polymerlösung werden mit 4,88 g Benzoesäure und 8,72 g t-Butylphenylglycidylether bei 120°C 2 h zur Reaktion gebracht. Die Polymerlösung wird mit 1-Methoxy-2-propylacetat auf einen Festkörper von 50% eingestellt.

### Polymer 2 (Diblockcopolymer A hergestellt mit NMP)

206 g 1-Methoxy-2-propylacetat, 9,6 g BlocBuilder, 16 g 2-Hydroxyethylmethacrylat, 58,4 g n-Butylacrylat, 56,2 g 2-(N,N-Dimethylamino)ethylmethacrylat, 36,8 g Styrol werden in einem Reaktionsgefäß unter einer Inertgasatmosphäre auf 115°C erwärmt. Die Reaktionszeit beträgt 5 Stunden, es wurde ein Umsatz von 90% (gemessen mit ¹H-NMR) erreicht. Nun wird eine Mischung aus 48 g 2-Hydroxyethylmethacrylat, 8,0 g 2-(N,N-Dimethylamino)ethylmethacrylat, 43 g Styrol, 12,9 g 2-Ethylhexylacrylat, 116,46 g n-Butylacrylat und 1,4 g 2,2'-Azobis(2-methylbutyronitrile) über einen Zeitraum von 60 min hinzudosiert. Die Reaktionszeit beträgt 5 Stunden, es wurde ein Umsatz von 92% (gemessen mit ¹H-NMR) erreicht. Es wird eine Mischung aus 71,8 g 1-Methoxy-2-propylacetat und 1,6 g 2,2'-Azobis(2-methylbutyronitrile) über einen Zeitraum von 60 min hinzudosiert. Die Nachreaktionszeit beträgt 120 Minuten. Die Polymerlösung wird mit 1-Methoxy-2-propylacetat auf einen Festkörper von 50% eingestellt.
Mₙ = 6220 g/mol
M_{w}/Mₙ = 3,5

### Bildung der ionischen Gruppen:

200 g der Polymerlösung werden mit 9,9 g Benzoesäure und 17,7 g t-Butylphenylglycidylether bei 120°C 2 h zur Reaktion gebracht. Zu der Polymerlösung werden 5,8 g Ricinolfettsäure gegeben und mit 1-Methoxy-2-propylacetat auf einen Festkörper von 50% eingestellt.

### Polymer 3 (Diblockcopolymer A hergestellt mit RAFT)

284,8 g 1-Methoxy-2-propylacetat, 20,1 g (MMA-Dimer) werden in einem Reaktionsgefäß unter einer Inertgasatmosphäre auf 120°C erwärmt. Nun wird eine Mischung aus 25,3 g 2-Hydroxyethylmethacrylat, 89,0 g 2-(N,N-Dimethylamino)ethylmethacrylat, 58,3 g Styrol, 92,5 g n-Butylmethacrylat und 1,4 g 2,2'-Azobis(2-methylbutyronitrile) über einen Zeitraum von 180 min hinzudosiert. Die Reaktionszeit beträgt 30 Minuten. Es wir eine Mischung aus 12,6 g 2-(N,N-Dimethylamino)ethylmethacrylat, 68,1 g Styrol, 20,4 g 2-Ethylhexylmethacrylat, 184,5 g n-Butylmethacrylat, 76,0 g 2-Hydroxyethylmethacrylat und 4,75 g 2,2'-Azobis(2-methylbutyronitrile) über einen Zeitraum von 90 min hinzudosiert. Die Reaktionszeit beträgt 30 Minuten. Über einen Zeitraum von 60 Minuten werden 2,39 g 2,2'-Azobis(2-methylbutyronitrile) zugegeben. Die Reaktionszeit beträgt 120 Minuten.
Mₙ = 4400 g/mol
M_{w}/Mₙ = 2,6

### Bildung der ionischen Gruppen:

150 g der Polymerlösung werden mit 12,5 g Benzoesäure und 22,3 g t-Butylphenylglycidylether bei 120°C 2 h zur Reaktion gebracht. Die Polymerlösung wird mit 1-Methoxy-2-propylacetat auf einen Festkörper von 50% eingestellt.

### Polymer 4 (Diblockcopolymer B hergestellt mit GTP)

Alle eingesetzten Rohstoffe werden mittels Flash-Chromatographie über basisches Alox gereinigt. Die Reaktionsapparatur ist wasserfrei und unter Inertgas. 115 g Tetrahydrofuran werden mit 6 g 1-Methoxy-2-methyl-1-trimethylsiloxypropen in einem Dreihalskolben vorgelegt. Es wird 0,6 g Tetrabutylammonium-m-chlorbenzoat 48 % in Acetonitril zugegeben und gleich im Anschluss langsam eine Mischung aus 28 g Methylmethacrylat, 14 g n-Butylmethacrylat, 14 g 2-Ethylhexylmethacrylat, 7 g Benzylmethacrylat und 7 g Ethyltriglykolmethacrylat so zugetropft, dass die Reaktionstemperatur 50°C nicht überschreitet. Ist die gesamte Mischung zugetropft, werden 70 g 2-(Dimethylamino)ethylmethacrylat bei 50°C zugetropft. Die Nachreaktionszeit beträgt 1 Stunde. Nun werden 6 mL Ethanol zugegeben und die Reaktion ist beendet. Anschließend wird das THF durch 1-Methoxy-2-propylacetat ersetzt und die Polymerlösung auf einen Festkörper von 60 % eingestellt.
Mₙ = 7430 g/mol
M_{w}/Mₙ = 1,34

### Bildung der ionischen Gruppen:

153,15 g der Polymerlösung werden mit 24,6 g Benzoesäure und 44,0 g t-Butylphenylglycidylether bei 120°C 2 h zur Reaktion gebracht. Die Polymerlösung wird mit 1-Methoxy-2-propylacetat auf einen Festkörper von 50% eingestellt.

### Polymer 5 (ABC-Triblockcopolymer)

17,9 g 2-Methoxypropanol, 4,8 g BlocBuilder, 14,6 g n-Butylacrylat, 4 g 2-Hydroxyethylmethacrylat, 9,2 g Styrol, 2 g 2-(N,N-Dimethylamino)ethylmethacrylat und 30 g Madquat Bz 75 werden in einem Reaktionsgefäß unter einer Inertgasatmosphäre (Stickstoff) auf 120°C erwärmt. Nachdem ein Umsetzungsgrad von 95% (gemessen mit ¹H-NMR) erreicht ist, wird eine Monomermischung aus 14,6 g n-Butylacrylat, 4 g 2-Hydroxyethylmethacrylat, 9,2 g Styrol, 2 g 2-(N,N-Dimethylamino)ethylmethacrylat, 10,1 g Madquat Bz 75 und 30 g 2-Methoxypropanol hinzugegeben. Nach einem Umsatz von 95% wurden 64,7 g n-Butylacrylat, 24 g 2-Hydroxyethylmethacrylat, 21,5 g Styrol, 2 g 2-(N,N-Dimethylamino)ethylmethacrylat, 2,8 g Madquat Bz 75 hinzugegeben. Nachdem ein Umsatz von 97% (gemessen mit ¹H-NMR) erreicht wurde wird die Polymerlösung auf Raumtemperatur heruntergekühlt und mit 2-Methoxypropanol auf einen Festkörper von 50% eingestellt.
Mₙ = 9870 g/mol
M_{w}/Mₙ = 1,87

| | |
|---|---|
| BlocBuil der: | NMP-Addukt, Hersteller Arkema |
| MMA-Dimer: | 2,2-Dimethyl-4-methylenpentandisäuredimethylester Herstellung siehe G. Moad, C. L. Moad, E. Rizzardo, S. H. Thang, Macromolecules 1996, 29, 7717 - 7726. |
| Madquat Bz 75: | 2-Benzyldimethylammoniumethylmethacrylatchlorid, 75%ig in Wasser, Hersteller Arkema |

### Zusammensetzung der Copolymermischungen

Polymermischung M1 (Vergleichsbeispiel zu M2, Mischung mit statistischem Copolymer 1):
   Mischung von Polymer 1 und 2 im Verhältnis 50 Gew-% Polymer 1 und 50 Gew-% Polymer 2.
Polymermischung M2:
   Mischung von Polymer 2 und 3 im Verhältnis 50 Gew-% Polymer 2 und 50 Gew-% Polymer 3.
Polymermischung M3:
   Mischung von Polymer 2 und 4 im Verhältnis 50 Gew-% Polymer 2 und 50 Gew-% Polymer 4.
Polymermischung M4 (Vergleichsbeispiel zu M3, Mischung mit statistischem Copolymer 1):
   Mischung von Polymer 1 und 4 im Verhältnis 50 Gew-% Polymer 1 und 50 Gew-% Polymer 4.
Polymermischung M5:
   Mischung von Polymer 4 und 5 im Verhältnis 50 Gew-% Polymer 4 und 50 Gew-% Polymer 5.

### Anwendungstechnische Tests

| Piqmentkonzentrat Eisenoxid | |
|---|---|
| 2-Methoxypropylacetat | 26,9 |
| Starsol | 3,0 |
| Netz- und Dispergiermittel | 9,6 |
| Bayferrox 130 M | 60,0 |
| Aerosil R 972 | 0,5 |
| | 100,0 |

| Piqmentkonzentrat Heliogenblau | |
|---|---|
| 2-Methoxypropylacetat | 56,3 |
| Starsol | 6,1 |
| Netz- und Dispergiermittel | 13,8 |
| Heliogenblau 7080 | 23,0 |
| BYK-Synergist 2100 | 0,8 |
| | 100,0 |

Dispergierung: 40 min bei 40°C und 8000 U/min, Dispermat CV

| Epikote-Lack: | |
|---|---|
| Epikote 1001 (75% i. Xylene) | 60,0 |
| Xylene | 17,0 |
| 2-Methoxypropanol | 12,8 |
| n- Butanol | 10,0 |
| BYK- 325 | 0,2 |
| | 100,0 |

| Härter: | |
|---|---|
| Versamid 115/70 | 71,0 |
| Xylene | 12,0 |
| 2-Methoxypropanol | 8,0 |
| n - Butanol | 9,0 |
| | 100,0 |

| Auflackung und Aushärtung des Lackes: | |
|---|---|
| Pigmentkonzentrat | 2,6 |
| Lack | 18,3 |
| Härter | 9,1 |
| | 30,0 |

| Synthalat-Lack: | |
|---|---|
| Synthalat F 477 /55% i. TB / X | 83,0 |
| Shellsol A | 13,5 |
| BorchNox M2 | 0,4 |
| Octa Soligen 173 | 2,6 |
| BYK-335 | 0,2 |
| BYK-066 N | 0,3 |
| | 100,0 |

| Auflackung und Aushärtung des Lackes: | |
|---|---|
| | |
| Pigmentkonzentrat | 2,6 |
| Lack | 17,4 |
| | 20,0 |

Das Pigmentkonzentrat wird mit dem Lack 5 min gerüttelt. Beim Epikote-Lack wird nach Zugabe des Härters die Mischung ein weiteres Mal homogenisiert.
Nach der Applikation wird ein Rub-out Test durchgeführt.
Trocknung des Lackfilms bei Raumtemperatur.

Messung des ΔE-Wertes mit Color-guide sphere d/8° spin von Byk Gardner.

| | |
|---|---|
| Starsol | Mischung von Diestern, Hersteller Haltermann |
| Bayferrox 130 M | Eisenoxidpigment, Hersteller Lanxess |
| Aerosil R 972 | hydrophobe, pyrogene Kieselsäure, Hersteller Degussa |
| Epikote 1001 | Reaktionsprodukt von Bisphenol A mit Epichlorhydrin, Hersteller Shell |
| BYK-325 | modifiziertes Polysiloxan, Hersteller Byk Chemie |
| Versamid 115 / 70 | aminhaltiges Polyamid, Hersteller Cognis |
| Synthalat F 477 | Alkydharz mit ungesättigten Fettsäuren, Hersteller Synthopol |
| Shellsol A | Kohlenwasserstoff, Hersteller Shell |
| BorchNox M2 | Ketoxim, Hersteller Borchers |
| Octa Soligen 173 | Ba- und Co-Salze von Fettsäuren, Hersteller Borchers |
| BYK-335 | modifiziertes Polysiloxan, Hersteller Byk Chemie |
| BYK-066 N | modifiziertes Polysiloxan, Hersteller Byk Chemie |

Beurteilung der Pigmentkonzentrate:

| Bayferrox | | | | | | | | |
|---|---|---|---|---|---|---|---|---|
| Polymer | **1** | **2** | **3** | **4** | | | | |
| Polymermischung | | | | | **M1** | **M2** | **M3** | **M4** |
| Viskosität | 1 | 1 | 1 | 1 | 1 | 1 | 1 | 1 |
| | | | | | | | | |
| Heliogenblau | | | | | | | | |
| Polymer | **1** | **2** | **3** | **4** | | | | |
| Polymermischung | | | | | **M1** | **M2** | **M3** | **M4** |
| Viskosität | 3 | 2 | 2 | 1 | 3 | 2 | 1 | 1 |

Beurteilung der Lackfilme nach 24 h:

| Bayferrox in Epikote 1001 aufgelackt | | | | | | | | |
|---|---|---|---|---|---|---|---|---|
| Polymer | **1** | **2** | **3** | **4** | | | | |
| Polymermischung | | | | | **M1** | **M2** | **M3** | **M4** |
| ΔE-Wert | 2,76 | 0,7 | 6,58 | 5,54 | 1,64 | 1,54 | 1,29 | 3,42 |
| Visuelle | 3 | 1 | 3 | 3 | 2 | 1 | 1 | 2 |
| Beurteilung der | | | | | | | | |

| Lackobertläche | | | | | | | | |
|---|---|---|---|---|---|---|---|---|
| | | | | | | | | |

| Heliogenblau in Epikote 1001 aufgelackt | | | | | | | | |
|---|---|---|---|---|---|---|---|---|
| Polymer | **1** | **2** | **3** | **4** | | | | |
| Polymermischung | | | | | **M1** | **M2** | **M3** | **M4** |
| Flockulation | 3 | 2 | 1 | 1 | 2 | 2 | 2 | 2 |
| Visuelle | 3 | 2 | 1 | 1 | 3 | 2 | 1 | 1 |
| Beurteilung der Lackoberfläche | | | | | | | | |

| Bayferrox in Synthalat F 477 aufgelackt | | | | | | | | |
|---|---|---|---|---|---|---|---|---|
| Polymer | **1** | **2** | **3** | **4** | | | | |
| Polymermischung | | | | | **M1** | **M2** | **M3** | **M4** |
| ΔE-Wert | 0,3 | 0,2 | 0,2 | 0,3 | 0,2 | 0,2 | 0,3 | 0,3 |
| Visuelle | 2 | 2 | 2 | 2 | 2 | 2 | 2 | 2 |
| Beurteilung der Lackoberfläche | | | | | | | | |

| Heliogenblau in Synthalat F 477 aufgelackt | | | | | | | | |
|---|---|---|---|---|---|---|---|---|
| Polymer | **1** | **2** | **3** | **4** | | | | |
| Polymermischung | | | | | **M1** | **M2** | **M3** | **M4** |
| Flockulation | 3 | 3 | 2 | 3 | 3 | 2 | 1 | 3 |
| Visuelle | 3 | 3 | 2 | 3 | 2 | 1 | 2 | 3 |
| Beurteilung der Lackoberfläche | | | | | | | | |

Beurteilung der Pigmentkonzentrate:

| | | | |
|---|---|---|---|
| Bayferrox | | | |
| Polymer | **4** | **5** | |
| Polymermischung | | | **M5** |
| Viskosität | 1 | 2 | 1 |
| | | | |
| Heliogenblau | | | |
| Polymer | **4** | **5** | |
| Polymermischung | | | **M5** |
| Viskosität | 1 | 3 | 1 |

Beurteilung der Lackfilme nach 24 h:

| Bayferrox in Epikote 1001 aufgelackt | | | |
|---|---|---|---|
| Polymer | **4** | **5** | |
| Polymermischung | | | **M5** |
| ΔE-Wert | 5,54 | 0,98 | 1,5 |
| Visuelle | 3 | 3 | 2 |
| Beurteilung der Lackoberfläche | | | |

| Heliogenblau in Epikote 1001 aufgelackt | | | |
|---|---|---|---|
| Polymer | **4** | **5** | |
| Polymermischung | | | **M5** |
| Flockulation | 1 | 2 | 2 |
| Visuelle | 1 | 2 | 2 |
| Beurteilung der Lackoberfläche | | | |
| | | | |

| Bayferrox in Synthalat F 477 aufgelackt | | | |
|---|---|---|---|
| Polymer | **4** | **5** | |
| Polymermischung | | | **M5** |
| ΔE-Wert | 0,3 | 5,7 | 1,3 |
| Visuelle | 2 | 3 | 2 |
| Beurteilung der Lackoberfläche | | | |
| | | | |

| Heliogenblau in Synthalat F 477 aufgelackt | | | |
|---|---|---|---|
| Polymer | **4** | **5** | |
| Polymermischung | | | **M5** |
| Flockulation | 3 | 3 | 2 |
| Visuelle | 3 | 3 | 2 |
| Beurteilung der Lackoberfläche | | | |

Die Beurteilungskriterien für die Auflackungen wurden wie folgt festgelegt: Viskositätsbeurteilung:
1 : dünnflüssig
2: dünnflüssig mit Fließgrenze
3: hochviskos

Flokkulationsbeurteilung:
1 : keine Flockulate in der Auflackung
2: wenige Flockulate in der Auflackung
3: viele Flockulate in der Auflackung

Visuelle Beurteilung der Lackoberfläche:
1: störungsfreie Lackoberfläche mit einem guten Verlauf
2: vereinzelte Stippen oder/und leicht Verlaufsstörungen
3: viele Stippen oder/und ein schlechter Verlauf, gekennzeichnet durch eine wellige Lackoberfläche

Eine schlechte Auflackung ist durch die Bewertungsstufe 3 für die Flockulationsneigung, die visuelle Beurteilung oder/und einen ΔE-Wert von größer als 2 beim Rub-Out gekennzeichnet.

In den Auflackungen und Pigmentkonzentrate mit den beiden Pigmenten Bayferrox und Heliogenblau führt die Verwendung von Polymeren 1 - 5 für jedes Polymer mindestens in einem Fall zu nachteiligen Eigenschaften wie hohe Viskosität des Pigmentkonzentrates oder eine mangelhafte Qualität der Auflackung wie Stippen oder Flockulate.

Für die Verwendung von Di- und Triblockcopolymeren zeigen die erfindungsgemäßen Polymermischungen **M2, M3** und **M5** gegenüber dem Stand der Technik (den einzelnen Polymeren und den Polymermischungen **M1** und **M4)** für beide Pigmente gute Auflackergebnisse in beiden ausgewählten Bindemittelsystemen. Diese Ergebnisse zeigen die breitere Verwendbarkeit der erfindungsgemäßen Polymermischungen.

## Patentansprüche

1. Zusammensetzung enthaltend zwei strukturierte lineare Copolymere gewählt aus der Gruppe bestehend aus Blockcopolymeren und Gradientencopolymeren **dadurch gekennzeichnet, dass** diese Copolymere mit unterschiedlichen kontrollierten Polymerisationstechniken hergestellt werden und dass die Differenz der Polydispersitäten dieser Copolymere Δ(M_{w}/Mₙ) ≥ 0,25 ist.

2. Zusammensetzung gemäß Anspruch 1, wobei diese zwei lineare Blockcopolymere enthält, die mit unterschiedlichen kontrollierten Polymerisationstechniken hergestellt werden und dass die Differenz der Polydispersitäten der beiden Blockcopolymere Δ(M_{w}/Mₙ) ≥ 0,25 ist.

3. Zusammensetzung gemäß Anspruch 1, wobei diese zwei lineare Gradientencopolymere enthält, die mit unterschiedlichen kontrollierten Polymerisationstechniken hergestellt werden und dass die Differenz der Polydispersitäten der beiden Gradientencopolymere Δ(M_{w}/Mₙ) ≥ 0,25 ist.

4. Zusammensetzung gemäß Anspruch 1, wobei diese ein lineares Blockcopolymer und ein lineares Gradientencopolymer enthält, wobei diese mit unterschiedlichen kontrollierten Polymerisationstechniken hergestellt werden und dass die Differenz der Polydispersitäten der beiden Copolymere Δ(M_{w}/Mₙ) ≥ 0,25 ist.

5. Zusammensetzung gemäß einem der Ansprüche 1, 2 oder 4, wobei eines oder mehrere der Blockcopolymere AB-, ABA- oder ABC-Blockcopolymere sind.

6. Zusammensetzung gemäß Anspruch 2, wobei ein Blockcopolymer ein AB-Blockcopolymer und das andere Blockcopolymer ein AB-, ABA- oder ABC-Blockcopolymer ist.

7. Zusammensetzung gemäß einem oder mehreren der Ansprüche 1, 2 oder 4 bis 6, wobei mindestens einer der Blöcke des Blockcopolymeren aus mindestens zwei unterschiedlichen einpolymerisierten ethylenisch ungesättigten Monomeren zusammengesetzt ist.

8. Zusammensetzung gemäß Anspruch 7, wobei alle Blöcke innerhalb eines Blockcopolymeren aus jeweils mindestens zwei unterschiedlichen einpolymerisierten ethylenisch ungesättigten Monomeren zusammengesetzt sind.

9. Zusammensetzung gemäß einem oder mehreren der Ansprüche 1 bis 8, wobei die zwei strukturierten linearen Copolymere in einem Gewichtsverhältnis von 5:95 bis 95:5 zueinander vorliegen.

10. Zusammensetzung gemäß einem oder mehreren der Ansprüche 1 bis 9, wobei die Polydispersität der Copolymere jeweils einen Wert von 1,05 bis 4 besitzt.

11. Zusammensetzung gemäß einem oder mehreren der Ansprüche 1 bis 10, wobei die zahlenmittlere Molmasse der Copolymere jeweils von 1000 bis 20000 g/mol beträgt.

12. Zusammensetzung nach einem oder mehreren der Ansprüche 1 bis 11, wobei die kontrollierten Polymerisationtechniken gewählt sind aus der Gruppe bestehend aus RAFT, NMP, ATRP, GTP, der kontrollierten radikalischen Polymerisation mit Tetraphenylethan, der kontrollierten radikalischen Polymerisation mit 1,1-Diphenylethen, der kontrollierten radikalischen Polymerisation mit Inifertern und der kontrollierten radikalischen Polymerisation mit Organokobaltkomplexen.

13. Zusammensetzung gemäß einem oder mehreren der Ansprüche 1 bis 12, wobei es sich um ein Netz- und Dispergiermittel handelt.

14. Zusammensetzung gemäß Anspruch 13, wobei diese höchstens 10 Gew.-% eines oder mehrerer statistischer Copolymere oder Homopolymere enthält.

15. Zusammensetzung nach Anspruch 14, die im Wesentlichen frei von statistischen Copolymeren und Homopolymeren ist.

16. Verfahren zur Herstellung der Zusammensetzungen nach einem oder mehreren der Ansprüche 1 bis 15, wobei die Copolymere in Lösung, gegebenenfalls unter Erwärmen gemischt werden.

17. Verwendung einer Zusammensetzung nach einem oder mehreren der Ansprüche 1 bis 15 oder erhalten nach dem Verfahren gemäß Anspruch 16 als Netzmittel und/oder Dispergiermittel.

18. Verwendung gemäß Anspruch 17, wobei das Netzmittel und/oder Dispergiermittel bei der Herstellung von Lacken, Tinten, Papierstrich, Leder- oder Textilfarben, Pasten, Pigmentkonzentraten, Keramiken, kosmetischen Zubereitungen, Gieß- oder Formmassen, Farbfiltern für Flüssigkristallanzeigen, Flüssigkristallbildschirmen, Farbauflösungsgeräten, Sensoren, Plasmabildschirmen, Anzeigen auf SED-Basis und für MLCC eingesetzt wird.

19. Verwendung gemäß Anspruch 17, wobei das Netzmittel und/oder Dispergiermittel zur Beschichtung von Pigmenten oder Füllstoffen eingesetzt wird.

20. Verwendung gemäß Anspruch 19, wobei die Pigmente oder Füllstoffe eine Teilchengröße unterhalb 100 nm besitzen.

21. Lacke, Pasten, Gießmassen oder Formmassen enthaltend eine Zusammensetzung nach einem oder mehreren der Ansprüche 1 bis 15 oder erhalten nach dem Verfahren gemäß Anspruch 16.

22. Pigmente oder Füllstoffe beschichtet mit einer Zusammensetzung nach einem oder mehreren der Ansprüche 1 bis 15 oder erhalten nach dem Verfahren gemäß Anspruch 16.

## Claims

1. Composition comprising two structured linear copolymers selected from the group consisting of block copolymers and gradient copolymers, **characterized in that** these copolymers are prepared by different controlled polymerization techniques and **in that** the difference in the polydispersities of these copolymers, Δ(M_{w}/Mₙ), is ≥ 0.25.

2. Composition according to Claim 1, comprising two linear block copolymers prepared by different controlled polymerization techniques, the difference in the polydispersities of the two block copolymers, Δ(M_{w/}Mₙ), being ≥ 0.25.

3. Composition according to Claim 1, comprising two linear gradient copolymers prepared by different controlled polymerization techniques, the difference in the polydispersities of the two gradient copolymers, Δ(M_{w}/Mₙ), being ≥ 0.25.

4. Composition according to Claim 1, comprising one linear block copolymer and one linear gradient copolymer prepared by different controlled polymerization techniques, the difference in the polydispersities of the two copolymers, Δ(M_{w}/Mₙ), being ≥ 0.25.

5. Composition according to any one of Claims 1, 2 and 4, one or more of the block copolymers being AB, ABA or ABC block copolymers.

6. Composition according to Claim 2, one block copolymer being an AB block copolymer and the other block copolymer being an AB, ABA or ABC block copolymer.

7. Composition according to one or more of Claims 1, 2 and 4 to 6, at least one of the blocks of the block copolymer being composed of at least two different copolymerized ethylenically unsaturated monomers.

8. Composition according to Claim 7, all blocks within a block copolymer being composed of in each case at least two different copolymerized ethylenically unsaturated monomers.

9. Composition according to one or more of Claims 1 to 8, the two structured linear copolymers being present in a weight ratio of 5:95 to 95:5 to one another.

10. Composition according to one or more of Claims 1 to 9, the polydispersity of the copolymers possessing in each case a value from 1.05 to 4.

11. Composition according to one or more of Claims 1 to 10, the number-average molar mass of the copolymers being in each case from 1000 to 20 000 g/mol.

12. Composition according to one or more of Claims 1 to 11, the controlled polymerization techniques being selected from the group consisting of RAFT, NMP, ATRP, GTP, controlled free-radical polymerization with tetraphenylethane, controlled free-radical polymerization with 1,1-diphenylethene, controlled free-radical polymerization with iniferters, and controlled free-radical polymerization with organocobalt complexes.

13. Composition according to one or more of Claims 1 to 12, being a wetting agent and dispersant.

14. Composition according to Claim 13, containing not more than 10% by weight of one or more random copolymers or homopolymers.

15. Composition according to Claim 14, being substantially free from random copolymers and homopolymers.

16. Process for producing the compositions according to one or more of Claims 1 to 15, the copolymers being blended in solution, with heating where appropriate.

17. Use of a composition according to one or more of Claims 1 to 15 or obtained by the process according to Claim 16 as wetting agent and/or dispersant.

18. Use according to Claim 17, the wetting agent and/or dispersant being used in the production of paints, inks, paper coatings, colours for leather or for textiles, pastes, pigment concentrates, ceramics, cosmetic preparations, casting or moulding compounds, colour filters for liquid-crystal displays, liquid-crystal screens, colour resolution devices, sensors, plasma screens, SED-based displays, and for MLCC.

19. Use according to Claim 17, the wetting agent and/or dispersant being used for coating pigments or fillers.

20. Use according to Claim 19, the pigments or fillers possessing a particle size below 100 nm.

21. Paints, pastes, casting compounds or moulding compounds comprising a composition according to one or more of Claims 1 to 15 or obtained by the process according to Claim 16.

22. Pigments or fillers coated with a composition according to one or more of Claims 1 to 15 or obtained by the process according to Claim 16.

## Revendications

1. Composition comprenant deux copolymères linéaires structurés choisis dans le groupe consistant en copolymères séquencés et copolymères à gradient, **caractérisée en ce que** lesdits copolymères sont produits avec des techniques de polymérisation contrôlée différents et la différence des polydispersités desdits copolymères Δ(M_{w}/Mₙ) ≥ 0,25.

2. Composition selon la revendication 1, la composition comprenant deux copolymères séquencés linéaires qui sont produits avec des techniques de polymérisation contrôlée différents et la différence des polydispersités des deux copolymères séquencés Δ(M_{w}/Mₙ) ≥ 0,25.

3. Composition selon la revendication 1, la composition comprenant deux copolymères à gradient linéaires qui sont produits avec des techniques de polymérisation contrôlée différents et la différence des polydispersités des deux copolymères à gradients Δ(M_{w}/Mₙ) ≥ 0,25.

4. Composition selon la revendication 1, la composition comprenant un copolymère séquencé linéaire et un copolymère à gradient linéaire, les copolymères étant produits avec des techniques de polymérisation contrôlée différents et la différence des polydispersités des deux copolymères Δ(M_{w}/Mₙ) ≥ 0,25.

5. Composition selon l'une quelconque des revendications 1, 2 ou 4, un ou plusieurs des copolymères séquencés étant des copolymères séquencés AB, ABA ou ABC.

6. Composition selon la revendication 2, un copolymère séquencé étant un copolymère séquencé AB et l'autre copolymère séquencé étant un copolymère séquencé AB, ABA ou ABC.

7. Composition selon une ou plusieurs des revendications 1, 2 ou 4 à 6, au moins un des blocs dudit copolymère séquencé étant composé d'au moins deux monomères monopolymérisés éthyléniquement non-saturés différents.

8. Composition selon la revendication 7, tous les blocs dans un copolymère séquencé étant respectivement composés d'au moins deux monomères monopolymérisés éthyléniquement non-saturés différents.

9. Composition selon une ou plusieurs des revendications 1 à 8, les deux copolymères linéaires structurés étant présents dans une proportion pondérale de l'un par rapport à l'autre de 5 : 95 à 95 : 5.

10. Composition selon une ou plusieurs des revendications 1 à 9, la polydispersité des copolymères respectivement possédant une valeur de 1,05 à 4.

11. Composition selon une ou plusieurs des revendications 1 à 10, la masse molaire moyenne en nombre des copolymères respectivement étant de 1000 à 20000 g/mol.

12. Composition selon une ou plusieurs des revendications 1 à 11, les techniques de polymérisation contrôlée étant choisis dans le groupe consistant en RAFT, NMP, ATRP, GTP, la polymérisation radicalaire contrôlée avec tétraphényléthane, la polymérisation radicalaire contrôlée avec 1,1-diphényléthène, la polymérisation radicalaire contrôlée avec des iniferters et la polymérisation radicalaire contrôlée avec des complexes organiques de cobalt.

13. Composition selon une ou plusieurs des revendications 1 à 12, la composition étant une agent mouillant et de dispersion.

14. Composition selon la revendication 13, la composition contenant 10 % au maximum d'un ou plusieurs copolymères statistiques ou homopolymères.

15. Composition selon la revendication 14, qui est essentiellement exempte des copolymères statistiques et homopolymères.

16. Procédé pour la fabrication des compositions selon une ou plusieurs des revendications 1 à 15, lesdits copolymères étant mélangés sous forme de solution, le cas échéant avec chauffage.

17. Utilisation d'une composition selon une ou plusieurs des revendications 1 à 15 ou obtenue selon le procédé de la revendication 16 en tant qu'agent mouillant et/ou agent de dispersion.

18. Utilisation selon la revendication 17, l'agent mouillant et/ou l'agent de dispersion étant utilisé dans la fabrication des vernis, encres, couchage du papier, teintures de cuir et textiles, pâtes, concentrés de pigments, céramiques, préparations cosmétiques, masses de coulée ou masses de moulage, filtres colorés pour affichages à cristaux liquide, écrans à cristaux liquide, dispositifs de résolution des couleurs, capteurs, écrans à plasma, affichages à base de SED et pour MLCC.

19. Utilisation selon la revendication 17, l'agent mouillant et/ou l'agent de dispersion étant utilisé pour le revêtement des pigments ou matériaux de remplissage.

20. Utilisation selon la revendication 19, lesdits pigments ou matériaux de remplissage possédant une dimension de particule au-dessous 100 nm.

21. Vernis, pâtes, masses de coulée et masses de moulage contenant une composition selon une ou plusieurs des revendications 1 à 15 ou obtenue selon le procédé de la revendication 16.

22. Pigments ou matériaux de remplissage revêtus avec une composition selon une ou plusieurs des revendications 1 à 15, ou obtenue selon le procédé de la revendication 16.
